# EUROPEAN PATENT SPECIFICATION

(11) **EP 2 499 902 B1**
(45) Date of publication and mention of the grant of the patent: **27.05.2015**
(21) Application number: 12159102.8
(22) Date of filing: 12.03.2012
(51) Int. Cl.: A01G 9/02, A01G 9/10

(54) **Tray for carrying plant pots**
Tablett zum Tragen von Pflanzentöpfen
Plateau pour porter des pots de plantes

(30) Priority: 16.03.2011 NL 2006406
(43) Date of publication of application: 19.09.2012
(73) Proprietor: Sierteelt Verpakkings Pool B.V., 2675 LX Honselersdijk (NL)
(72) Inventor: Van de Put, Johannes, 2221 MN Katwijk aan Zee (NL)
(74) Representative: van Oeffelt, Abraham

(56) References cited:
- EP-A1- 1 741 332
- EP-A2- 1 459 620
- US-A1- 2002 066 227
- US-A1- 2009 151 247

## Description

The present invention relates to a tray for carrying plant pots. Such trays are well known in the art of horticultural business (see for example EP 1 459 620 A2). They serve for transport of (filled) plant pots, for example at flower auctions, at markets, in garden centers, supermarkets and DIY shops.

Various types and models have been proposed throughout the years. Their dimensions vary based on their specific purpose (eg. plant height, pot size the pot : plantdiameter ratio, a display and/or a transport emphasis), and so does their division in spaces for plant pots. The models are part of a standardized system of trays used in the horticultural business. Standardization is desired as much trade takes place via auctions and/or whole sale markets, in which case it is at first (when filling the tray with plants) not known yet who will be the purchaser of the produce neither is thus know what the transportation requirements are going to be - other than that the product is to be handled effectively when it is to be carried by the tray and as it needs to be easily combined (modular) with other products which are purchased by the subsequent (unknown) buyer and further as the produce needs to protected effectively in the handling and transportation within the chain and also as it concerns a perishable product in which handling speed within the entire chain is a very important factor (every day delay means a substantial decline in the value).

The present standard is established after years of intensive, exhaustive and tedious negotiations between numerous parties within the horticultural branch - from growers, to auctions, to wholesalers, to retail business and producers - resulting in a broadly accepted standard (in 2009 being 170 million standard Normpack® trays, representing possibly up to 50% of the European market for planttrays) in the horticultural branch.

It has also been a purpose in general to produce these trays as economically as possible. A cheap production can for example be obtained by minimising the amount of material used for the production of a tray. Generally speaking, approx. 50% of the production costs of the trays is purely caused by the component "material costs". However, the use of less material leads normally to an undesired reduction of the strength of the tray.

It is a goal of the present invention to provide a tray for carrying a plant pot, that lacks the above disadvantages, or to provide a useful alternative to the existing plant trays.

The invention thereto proposes a tray for carrying plant pots, comprising an essentially rectangular sheet, with an upper side and a lower side, holders for plant pots, provided in the sheet, and a wall, extending from the contour of the sheet in the lower side direction wherein at least at two opposite sides of the rectangle, the wall has a height that increases and subsequently decreases seen in a direction from a first end to a second end of said sides.

It has appeared that due to the varying height of the wall, a greater stiffness of the tray can be obtained. This has a positive affect on the (unwanted) torsion, the carrying performance and manageability of the tray in general too. Since the height increases and decreases subsequently, the biggest height (or heights, if more than one is used) is situated in between the two ends of the respective sides, which leads to further improvement of stiffness. When a tray bends and/or buckles/cracks, this usually takes place at an intersection line between holders, for example at one third, half or two third of the distance from the first end to the second end of a side. The biggest height may be chosen at a location where the risk of bending is the highest. Optionally, there may be more than one local largest height. An area with an increased wall-height may be referred to as a bridge in the following.

In an embodiment, the lower edge of the wall is essentially straight. This has the advantage that the tray is easily handled, and/or stackable with sort-like or the same trays handled, with a clear straight shape and easier to produce affectively as this is the rim which is to be cut or punched during the production process to separate the formed product from the remained of the original sheet. Besides that, the overall contour of the tray and/or a stack of similar or equal trays has a rectangular contour, which enables economic and efficient storage and packaging of the trays.

In another embodiment, the tray according to the invention is at least partly arched. This shape has the advantage that it may incorporated smoothly in the design of the tray, without the need for sharp edges. Not only are these edges undesired during handling the tray, but they also form potentially weak points of the tray, while an arched form does not set such preconditions.

Further advantage may be reached, depending on the traytype involved - with its specific plantholder pattern - when the wall is at least at the two sides uninterrupted. Uninterrupted means here at least that the holders for the plant pots do not extend beyond the contour of the wall. Interruptions have potentially the same disadvantages of causing local weakness.

When several possible bending or cracking points or lines are to be expected, multiple local biggest heights may be applied in the wall for strength compensation purposes. However, for reasons of simplicity and ease of manufacture, at least at two opposite sides of the rectangle, the wall may have a height that solely increases and subsequently decreases seen in a direction from a first end to a second end of said sides.

If there are only two sides with walls with a height that changes, the sheet may be simple curved. This leads to further simplification of the tray, and its production process. It is however also possible to provide the sheet with four walls, having a height that increases and subsequently decreases seen in a direction from a first end to a second end of said sides. In that case, a double curved sheet may be applied.

In yet another embodiment, the holders of the tray may comprise an opening in the sheet, which opening falls within the contour of the sheet. In the opening, a pot for a plant can be positioned. For reasons of stability, cups may be located adjacent to the openings, each for holding a plant pot. In such a case, the openings form the top and entrance of the cups, and the cups each support plant pot, so that a higher weight of the cup can be carried.

In order to facilitate easy watering of the plants, a fluid channel may extend between at least two cups. The cups may further be provided with a profiled wall and/or bottom surface. Also the rim of the tray may be formed more in such a way that 'a dike' is formed, with a higher top level at the rim and a lower level at the inner plain of the tray.

The tray according to the invention may be manufactured by means of vacuum moulding, thermal moulding of a blank. The blank (e.g. a foil) may comprise plastics like PS or PET or other similar kinds of plastics. For special purposes (higher weights), injection moulding may be possible too.

Trays according to the art have a wall thickness between 0.8 mm and 1.4 mm. A tray according to the present invention may have a reduced wall thickness up to 50% compared to the original thickness, or - at the same thickness as the prior art - have an increased carrying capacity up to + 50% with respect to the prior art level of 4 to 12 kg. The format of the essentially rectangular sheet may have a dimension between 60 times 31 cm and 50 times 25 cm, and 40 and 28 cm. The total weight may be between 80 and 200 grams.

It is a goal of the present invention to provide a tray for carrying a plant pot, that lacks the above disadvantages, or to provide a useful alternative to the existing plant trays. The invention will now be elucidated into more detail with reference to the following figures. Herein:

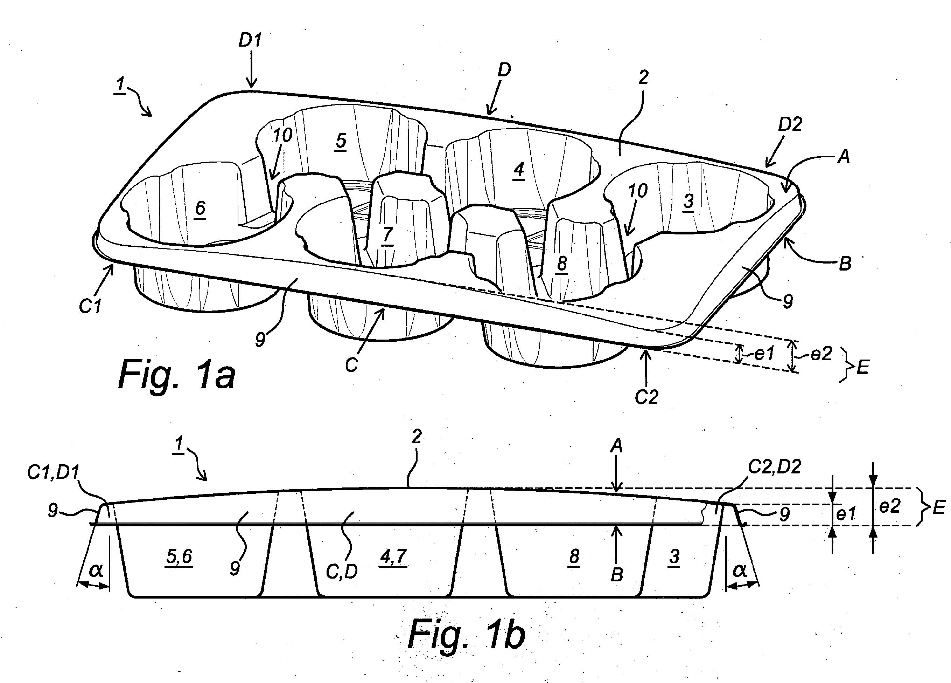

- Figure 1a shows a perspective view of a tray for carrying plant pots according to the present invention; and
- Figure 1b shows a sectional view of the tray from figure 1a.

Figure 1a shows a perspective view of a tray 1 for carrying plant pots according to the present invention In this instance a tray for 6 plants is displayed. In practise the number of holders may vary from 1 till up to 60 per tray. The tray comprises an essentially rectangular sheet 2 , with an upper side A and a lower side B, holders 3-8 for plant pots, provided in the sheet, and a wall 9, extending from the contour of the sheet 2 in the lower side B direction, wherein at two opposite sides C, D of the rectangle, the wall has a height E that increases from level e1 to level e2 and subsequently decreases back to level e2, when seen in a direction from a first end C1, D1 to a second end C2, D2 of said sides. Between the cups, channels 10 are available, to enable easy watering of the plants when positioned. By means of these channels, the water divides itself between the cups when water is applied to one cup only.

Figure 1b shows a sectional view of the tray 1 from figure 1a. Like referential numbers indicate like parts of the tray 1. In figure 2, the height E is between e1, which may for example be 25 mm, and e2, which may for example be 30 mm. In practical embodiments, the heights e1 and e2 may vary between 5 and 40 mm, and their difference thus between 1 and 35 mm. Figure 1b further shows that the wall 9 may be inclined over an angle alpha outwardly, in order to make the trays stackable.

Apart for a single so called bridge, depending on expected bending lines of the tray, more bridges may be present per side, and the form and dimensions of the bridges may vary. All embodiments are considered to fall within the scope of the following claims. The bridge can be curved smoothly, shaped with straight lines forming a triangular form or curved in any other shape. The essence being that it increase to a given height after which it subsequently decreases, seen in the direction from a first end to a second end of given sides.

## Claims

1. Tray (1) for carrying plant pots, comprising:
- a sheet (2), with an upper side (A) and a lower side (B);
- holders (3-8) for plant pots, provided in the sheet;
- a wall (9), extending from the contour of the sheet in the lower side direction;
**characterised in that** :
- at least at two opposite sides (C,D) of the tray, the wall has a height (E) that increases and subsequently decreases, seen in a direction from a first end to a second end of said sides.

2. Tray according to claim 1, wherein the sheet is essentially rectangular.

3. Tray according to claim 1 or 2, wherein the lower edge of the wall is essentially straight.

4. Tray according to any of the preceding claims, wherein the wall is at least partly arched.

5. Tray according to any of the preceding claims, wherein the wall is at least at the two sides uninterrupted.

6. Tray according to any of the preceding claims, wherein at least at two opposite sides of the tray, the wall has a height that solely increases and subsequently decreases, seen in a direction from a first end to a second end of said sides.

7. Tray according to any of the preceding claims, wherein the sheet is simple curved.

8. Tray according to any of the preceding claims, wherein the holders comprise an opening in the sheet, which opening falls within the contour of the sheet.

9. Tray according to claim 8, wherein cups are located adjacent to the openings, each for holding a plant pot.

10. Tray according to claim 9, wherein a fluid channel (10) extends between at least two cups.

11. Tray according to claim 9 or 10, wherein the cups are provided with a profiled wall and/or bottom surface.

12. Tray according to any of the preceding claims, manufactured by means of vacuum moulding of a blank.

13. Tray according to any of the preceding claims, wherein the material thickness is between 0.8 and 1.4.

14. Tray according to any of the preceding claims, wherein the essentially rectangular sheet has dimensions between 60 times 31 cm and 50 times 25 cm.

15. Tray according to any of the preceding claims, wherein the total weight is between 80 and 200 grams.

## Patentansprüche

1. Tablett (1) zum Tragen von Pflanzentöpfen, umfassend:
- ein Flächengebilde (2) mit einer oberen Seite (A) und einer unteren Seite (B),
- im Flächengebilde vorgesehene Halter (3 - 8) für Pflanzentöpfe,
- eine Wand (9), die sich von der Kontur des Flächengebildes in der Richtung der unteren Seite erstreckt,
**dadurch gekennzeichnet, dass**
- die Wand an mindestens zwei gegenüberliegenden Seiten (C, D) des Tabletts eine Höhe (E) hat, die, in einer Richtung von einem ersten Ende zu einem zweiten Ende der Seiten gesehen, zunimmt und danach abnimmt.

2. Tablett nach Anspruch 1, wobei das Flächengebilde im Wesentlichen rechteckig ist.

3. Tablett nach Anspruch 1 oder 2, wobei der untere Rand der Wand im Wesentlichen gerade ist.

4. Tablett nach einem der vorhergehenden Ansprüche, wobei die Wand mindestens teilweise gebogen ist.

5. Tablett nach einem der vorhergehenden Ansprüche, wobei die Wand mindestens an den beiden Seiten ununterbrochen ist.

6. Tablett nach einem der vorhergehenden Ansprüche, wobei die Wand mindestens an zwei gegenüberliegenden Seiten des Tabletts eine Höhe hat, die in einer Richtung von einem ersten Ende zu einem zweiten Ende der Seiten gesehen, nur zunimmt und danach abnimmt.

7. Tablett nach einem der vorhergehenden Ansprüche, wobei das Flächengebilde einfach gekrümmt ist.

8. Tablett nach einem der vorhergehenden Ansprüche, wobei die Halter eine Öffnung im Flächengebilde umfassen, die innerhalb der Kontur des Flächengebildes fällt.

9. Tablett nach Anspruch 8, wobei Becher in der Nähe der Öffnungen angeordnet sind, jeweils zum Halten eines Pflanzentopfs.

10. Tablett nach Anspruch 9, wobei sich ein Fluidkanal (10) zwischen mindestens zwei Bechern erstreckt.

11. Tablett nach Anspruch 9 oder 10, wobei die Becher mit einer profilierten Wand und/oder Bodenfläche versehen sind.

12. Tablett nach einem der vorhergehenden Ansprüche, das mittels Vakuumformens eines Rohlings hergestellt ist.

13. Tablett nach einem der vorhergehenden Ansprüche, wobei die Materialdicke zwischen 0,8 mm und 1,4 mm liegt.

14. Tablett nach einem der vorhergehenden Ansprüche, wobei das im Wesentlichen rechteckige Flächengebilde Abmessungen zwischen 60 x 31 cm und 50 x 25 cm hat.

15. Tablett nach einem der vorhergehenden Ansprüche, wobei das Gesamtgewicht zwischen 80 und 200 Gramm beträgt.

## Revendications

1. Plateau (1) pour porter des pots de plantes, comprenant :
- une feuille (2) comprenant un côté supérieur (A) et un côté inférieur (B) ;
- des supports (3-8) pour des pots de plantes, prévus dans la feuille ;
- une paroi (9), s'étendant à partir du contour de la feuille dans la direction du côté inférieur ;
**caractérisé en ce que** :
- au moins au niveau de deux côtés opposés (C, D) du plateau, la paroi a une hauteur (E) qui augmente et diminue ensuite, vu dans une direction à partir d'une première extrémité jusqu'à une deuxième extrémité desdits côtés.

2. Plateau selon la revendication 1, dans lequel la feuille est essentiellement rectangulaire.

3. Plateau selon la revendication 1 ou 2, dans lequel le bord inférieur de la paroi est essentiellement droit.

4. Plateau selon l'une quelconque des revendications précédentes, dans lequel la paroi est au moins partiellement arquée.

5. Plateau selon l'une quelconque des revendications précédentes, dans lequel la paroi est ininterrompue au moins au niveau des deux côtés.

6. Plateau selon l'une quelconque des revendications précédentes, dans lequel, au moins au niveau de deux côtés opposés du plateau, la paroi a une hauteur qui augmente uniquement et diminue ensuite, vu dans une direction à partir d'une première extrémité jusqu'à une deuxième extrémité desdits côtés.

7. Plateau selon l'une quelconque des revendications précédentes, dans lequel la feuille est simplement courbée.

8. Plateau selon l'une quelconque des revendications précédentes, dans lequel les supports comprennent une ouverture dans la feuille, laquelle ouverture se situe à l'intérieur du contour de la feuille.

9. Plateau selon la revendication 8, dans lequel des coupelles sont situées de manière adjacente aux ouvertures, chacune étant destinée à retenir un pot de plante.

10. Plateau selon la revendication 9, dans lequel un canal de fluide (10) s'étend entre au moins deux coupelles.

11. Plateau selon la revendication 9 ou 10, dans lequel les coupelles sont pourvues d'une paroi profilée et/ou d'une surface inférieure.

12. Plateau selon l'une quelconque des revendications précédentes, fabriqué par moulage sous vide d'une ébauche.

13. Plateau selon l'une quelconque des revendications précédentes, dans lequel l'épaisseur de matériau est entre 0,8 mm et 1,4 mm.

14. Plateau selon l'une quelconque des revendications précédentes, dans lequel la feuille essentiellement rectangulaire a des dimensions entre 60 fois 31 cm et 50 fois 25 cm.

15. Plateau selon l'une quelconque des revendications précédentes, dans lequel le poids total est entre 80 et 200 grammes.
